# EUROPÄISCHE PATENTSCHRIFT

(11) **EP 1 139 029 B1**
(45) Veröffentlichungstag und Bekanntmachung des Hinweises auf die Patenterteilung: **11.06.2008**
(21) Anmeldenummer: 01105733.8
(22) Anmeldetag: 08.03.2001
(51) Int. Cl.: F24D 3/08, F24D 19/10

(54) **Verfahren zum Betreiben einer Heizungsanlage**
Operating procedure for a heating system
Procédé d'operation pour une installation de chauffage

(30) Priorität: 31.03.2000 DE 10016172
(43) Veröffentlichungstag der Anmeldung: 04.10.2001
(73) Patentinhaber: ROBERT BOSCH GMBH, 70442 Stuttgart (DE)
(72) Erfinder: Kehl, Albin, Dr., 73098 Rechberghausen (DE); Gralka, Ulrich, Raia da Barra, 3830 Gafanta da Nazaré (PT); Fischer, Ralf, 73728 Esslingen (DE)

(56) Entgegenhaltungen:
- EP-A- 0 936 415
- DE-A- 2 937 067
- DE-A- 3 431 555
- DE-A- 19 725 952

## Beschreibung

### Stand der Technik

Die Erfindung betrifft eine Heizungsanlage mit einem mit Regelkreis versehenen Wärmeerzeuger, der einen Wärmetauscher mit einem Brauchwasserkreis und einem Heizwasserkreis mit Wärme versorgt, wobei im Brauchwasserkreis mit abzweigenden Zapfstellen eine Zirkulationspumpe eingeschleift ist und wobei die Temperatur des Brauchwassers vorwählbar ist.

Die EP 0 936 415 A2 zeigt eine Warmwasser-Versorgungsanlage mit Zirkulationsleitung, bei der die Zirkulationswassermenge auf einen Wert begrenzt ist, der unterhalb einer für das Einschalten des Wärmequelle relevanten Einschaltwassermenge liegt, und bei der bei reinem Zirkulationsbetrieb die Wärmequelle mit der für die Erhaltung einer vorgegebenen Zirkulationswassertemperatur erforderlichen Leistung gesteuert ist. Dadurch ist ohne Anordnung eines zusätzlichen Speichers ein wirtschaftlicher Zirkulationswasserbetrieb mit verringerter Einschalthäufigkeit der Wärmequelle möglich.

Die DE 197 25 952 A1 offenbart ein Verfahren zur Brauchwasserbereitstellung in einem kombinierten System zum Heizen und zur Brauchwasserbereitung, wobei das Brauchwasser mittelbar über das Heizungswasser erwärmt wird und im Fall der Brauchwasserentnahme eine Umlaufpumpe in einem Heizungswasserkreislauf und ein Brenner zur Erwärmung des Heizungswassers eingeschaltet wird. Um eine Verkürzung der Aufheizzeit des Brauchwassers zu erreichen, wird bei einer Brauchwasserentnahme zuerst der Brenner eingeschaltet und die Umlaufpumpe zeitversetzt dazu bei Erreichen eines vorgebbaren Temperaturwerts für das Heiz- oder Brauchwasser dazugeschaltet.

Aus der DE 34 31 555 A1 ist eine Warmwasseranlage bekannt, bei der in den Brauchwasserkreis eine Zirkulationspumpe eingeschaltet ist, die immer dann eingeschaltet wird, wenn im Brauchwasserkreis eine Strömung entsteht, d.h. wenn eine Zapfstelle geöffnet und Brauchwasser entnommen wird. Am Ausgang des Brauchwasserkreises wird mittels eines Sensors eine Strömung im Brauchwasserkreis festgestellt und die Zirkulationspumpe eingeschaltet, wobei die Steuerschaltung einen Zeitschalter aufweist, der die Zirkulationspumpe nach einer bestimmten Laufdauer abschaltet. Die Zeitdauer ist dabei so gewählt, dass der Brauchwasserkreis bis zur letzten Zapfstelle hin mit warmem Wasser gefüllt ist. Der Sensor ist dabei als Temperaturfühler ausgebildet.

Die Zirkulationspumpe wird dabei in programmierbaren Zeiten ein- und ausgeschaltet. Da Heizkreis und Brauchwasserkreis über den Zweikreis-Wärmetauscher in Wärmekopplung miteinander verbunden sind, lässt es sich nicht vermeiden, dass das Brauchswasser in den programmierten Zeiten auch unter den vorgegebenen Temperaturwert absinken kann. Das angebotene Brauchwasser hat bei der Entnahme dann nicht sofort die gewünschte Temperatur, d.h. es ist keine ausreichende Komfortbereitschaft druch den Brauchwasserkreis gewährleistet.

Es ist Aufgabe der Erfindung, ein Verfahren zum Betreiben einer Heizungsanlage der eingangs erwähnten Art bereit zu stellen, um die Komfortbereitschaft des Brauchwasserkreises zu verbessern, ohne auf den Einsatz der herkömmlichen zeitprogrammierbaren Zirkulationspumpe verzichten zu müssen.

Diese Aufgabe wird durch die Merkmale des Anspruchs 1 gelöst.

Mit dieser Ausgestaltung wird auf einfache Weise ohne Austausch der Zirkulationspumpe gerade bei ausgeschaltetem Wärmeerzeuger eine Nachheizung, d.h. Erwärmung des Brauchwassers auf die vorgegebene Temperatur, ausgeführt, so dass bei einer Entnahme von Brauchwasser während der vorprogrammierten Zeiten dieses stets mit der gewünschten Temperatur abgegeben wird.

Die Temperatur wird mittels eines Temperatursensors am Brauchwasser-Ausgang des Wärmetauschers erfasst und als Temperatur-Messsignal an den Regelkreis des Wärmeerzeugers weitergeleitet, wo es mit der vorgegebenen Brauchwasser-Temperatur verglichen und zur Einschaltung des Wärmeerzeugers benutzt wird, wenn die erfasste Temperatur unterhalb der vorgegebenen Brauchwassertemperatur liegt.

Da gerade im Winterbetrieb der Heizungsanlage dem Heizkreis gegenüber dem Brauchwasserkreis die Priorität einzuräumen ist, sieht eine Weiterbildung vor, dass mittels eines weiteren Temperatursensors die Temperatur des Heizkreis-Vorlaufes messbar ist und dass der Regelkreis in Abhängigkeit von der Unterschreitung der vorgegebenen Vorlauftemperatur die Einschaltung des Wärmeerzeugers unabhängig von den Temperaturbedingungen im Brauchwasserkreis steuert.

Nach einer weiteren Ausgestaltung ist vorgesehen, dass in den Heizkreis ein Umsteuerventil eingeschleift ist, dem eine Umschaltventil-Steuerschaltung zugeordnet ist, dass dem Brauchwasserkreis über eine Wasserarmatur mit Wasserarmatur-Steuerschaltung Kaltwasser zuführbar ist, dass die Wasserarmatur-Steuerschaltung bei Zufuhr von Kaltwasser ein Schaltsignal an die Umsteuerventil-Steuerschaltung abgibt und dass das umgesteuerte Umschaltventil den eigentlichen Heizkreis abschaltet und auf einen Innenwasserkreis umschaltet, um die Nachheizung des Brauchwasserkreises zu beschleunigen. Dabei wird diese Umschaltung zumindest bis zur Beendigung der Brauchwasserentnahme aufrechterhalten.

Die Erfindung ist insbesondere bei einer als Gastherme ausgebildeten Heizungsanlage mit Vorteil einsetzbar.

Die Erfindung wird anhand eines als Blockschaltbild dargestellten Ausführungsbeispieles näher erläutert.

Wie das Blockschaltbild zeigt, weist die Heizungsanlage einen Wärmeerzeuger 10 auf, der z.B. als Gastherme ausgebildet sein kann. Alle bekannten Wärmeerzeuger können für die Heizungsanlage gemäß der Erfindung eingesetzt werden. Voraussetzung ist lediglich, dass dieser Wärmeerzeuger 10 einen Wärmetauscher 12 mit einem Wärmetauscherteil 14 für den Brauchwasserkreis 15 und einem Wärmetauscherteil 13 für den Heizwasserkreis 18 aufweist, aufheizt und mit Wärme versorgt, die an das die beiden Wärmetauscherteile 13 und 14 durchfließende Wasser abgegeben wird. Dem Wärmeerzeuger 10 ist ein Regelkreis 11 zugeordnet, mit dem die Ein- und Ausschaltung sowie die Heizleistung geregelt werden kann.

Der Heizwasserkreis 18 geht vom Wärmetauscherteil 13 aus und umfasst den Vorlaufstrang 16 und den Rücklaufstrang 17. Der eigentliche Heizwasserkreis 18 mit den Heizkörpern liegt zwischen dem Vorlaufstrang 16 und dem Rücklaufstrang 17. In den Rücklaufstrang 17 ist ein Umsteuerventil 20 eingeschleift, das bei einer Ansteuerung über die Umsteuerventil-Steuerschaltung 29 den eigentlichen Heizwasserkreis 18 abschaltet und einen Innenwasserkreis 21 an den Vorlaufstrang 16 und Rücklaufstrang 17 anschaltet. Der Heizwasserkreis 18 weist in dem Rücklaufstrang 17 noch eine Umwälzpumpe 27 auf.

Das Wärmetauscherteil 14 speist den Brauchwasserkreis 15 mit den Zapfstellen 22, der über einen Temperatursensor 30 ausgangseitig überwacht wird. Über eine Zirkulationspumpe 23 und ein Regelventil 26 führt der Brauchwasserkreis 15 wieder zum Wärmetauscherteil 14 zurück.

Damit angebotenes Brauchwasser stets die gewünschte Temperatur aufweist, ist gerade bei ausgeschaltetem Wärmeerzeuger 10 und im Sommerbetrieb der Heizungsanlage eine Nachregelung der Brauchwassertemperatur erforderlich. Geht man dabei davon aus, dass die verwendete Zirkulationspumpe 23 nur mit den Einschaltzeiten programmierbar ist, dann muss dafür gesorgt werden, dass in den Einschaltphasen der Zirkulationspumpe 23 der Regelkreis 11 angesteuert wird und mit dem Temperatursensor 30 die Temperatur des Brauchwassers erfasst und an den Regelkreis 11 des Wärmeerzeugers 10 weiter geleitet wird. Da dort der Einschaltzustand der Zirkulationspumpe 23 nun bekannt ist, wird in den Einschaltphasen der Zirkulationspumpe 23 der vom Temperatursensor 30 erfasste Temperatur-Messwert 32 mit der vorgegebenen Brauchwassertemperatur verglichen.

Ist die erfasste Temperatur kleiner als die vorgegebene Brauchwassertemperatur, dann wird über den Regelkreis 11 der Wärmeerzeuger 10 solange eingeschaltet und nachgeheizt, bis die vom Temperatur-Sensor 30 erfasste Temperatur die vorgegebene Brauchwassertemperatur erreicht hat. Damit ist gewährleistet, dass in allen vorprogrammierten Zeiten für den Brauchwasserkreis 15 das angebotene Brauchwasser die gewünschte, vorwählbare Temperatur aufweist.

Wie das Blockschaltbild zeigt, kann mit einem weiteren Temperatur-Sensor 31 auch die Vorlauftemperatur im Heizkreis 18 überwacht werden. Dies ist besonders im Winterbetrieb der Heizungsanlage von Bedeutung. Auch diese Temperatur in der Heizkreis-Vorlaufleitung 16 wird dem Regelkreis 11 zugeführt und zur Ein- und Ausschaltung des Wärmeerzeugers 10 verwendet. Dabei genießt die Nachregelung des Heizkreises 18 gegenüber der Nachregelung des Brauchwasserkreises 15 Priorität. Es ist wichtig, dass die Vorlauftemperatur den vorgegebenen Temperaturwert einhält. Damit es dabei nicht zur Überhitzung des Brauchwasserkreises 15 kommt, kann vorgesehen sein, dass beim Erreichen der vorgegebenen Brauchwassertemperatur über den Regelkreis 11 auch die Zirkulationspumpe 23 abschaltbar ist, auch wenn der Zeitpunkt noch als Einschaltphase der Zirkulationspumpe 23 vorprogrammiert ist.

Das kalte Wasser 24 wird über eine Wasserarmatur 25 hinter den Zapfstellen 22 dem Brauchwasserkreis 15 zugeführt. Eine derartige Wasserarmatur 25 kann eine Venturidüse, ein Überdruckventil, einen Wassermengenregler, eine Membran, einen Stöpsel mit Schaltnocken, einen Mikroschalter und einen Wasserschalter vereinen. In Verbindung mit der vorliegenden Erfindung ist nur eine Wasserarmatur-Steuerschaltung 28 von Bedeutung, die die bei der Entnahme von Brauchwasser an einer der Zapfstellen 22 auftretende Strömung in der Kaltwasser-Zuführleitung 24 registriert.

Wird die Entnahme von Brauchwasser festgestellt, dann steuert ein Schaltsignal bzw die Umsteuerventil-Steuerschaltung 29 in den Umsteuerschaltzustand, bei dem der eigentliche Heizwasserkreis 18 abgeschaltet und der Innenwasserkreis 21 angeschaltet ist. Auch der Regelkreis 11 des Wärmeerzeugers 10 wird davon in Kenntnis gesetzt, so dass dieser eingeschaltet wird und dafür sorgt, dass der Brauchwasserkreis 15 bei abgeschaltetem Heizwasserkreis 18 auf eine vorgegebene oder vorgebbare Temperatur nachgeregelt wird. Dazu wird das Messergebnis des Temperatursensors 30 am Ausgang des Wärmetauscherteils 14 gemessen und an den Regelkreis 11 als Messsignal 32 weitergegeben. Ist die Nachregelung beendet, dann überträgt der Regelkreis 11 ein Steuersignal 34 an die Umsteuerventil-Steuerschaltung 29, das die Rückschaltung des Umsteuerventils 20 nur dann bewirkt, wenn die Wasserarmatur-Steuerschaltung 28 kein Schaltsignal 23 mehr abgibt, d.h. anzeigt, dass keine Brauchwasserentnahme mehr stattfindet. Das Umsteuerventil 20 schaltet vom Innenwasserkreis 21 wieder auf den eigentlichen Heizwasserkreis 18 zurück.

Die Zirkulationspumpen-Steuerschaltung 19 kann in die Zirkulationspumpe 23 integriert sein. Dasselbe gilt für die Umsteuerventil-Steuerschaltung 29 und das Umsteuerventil 20 sowie für die Wasserarmatur-Steuerschaltung 28 und die Wasserarmatur 25.

Die Steuerung der Umwälzpumpe 27 kann in bekannter Weise über den Regelkreis 11 erfolgen und in die Nachregelung des Brauchwasserkreises 15 einbezogen werden.

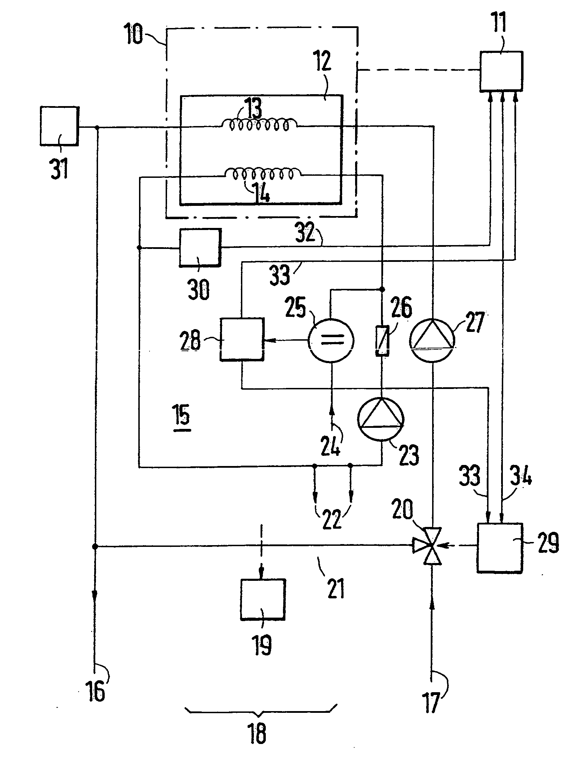

## Patentansprüche

1. Verfahren zum Betreiben einer Heizungsanlage mit einem Regelkreis (11) versehenen Wärmeerzeuger (10), der einen Wärmetauscher (12) mit einem Brauchwasserkreis (15) und einem Heizwasserkreis (18) mit Wärme versorgt, wobei in den Brauchwasserkreis (15) mit abzweigenden Zapfstellen (22) eine in ihrer Einschaltzeit programmierbare Zirkulationspumpe (23) eingeschleift ist und wobei die Temperatur des Brauchwassers vorwählbar ist, **dadurch gekennzeichnet,**
**dass** zumindest mit den Einschaltphasen der Zirkulationspumpe (23) der Regelkreis (11) angesteuert wird, der mittels eines Temperatursensors (30) die Brauchwassertemperatur überwacht, und
**dass** der Regelkreis (11) bei ausgeschaltetem Wärmeerzeuger (10) bei Unterschreitung der vorgegebenen Brauchwassertemperatur über den Wärmeerzeuger (10) eine Nachheizung einleitet und diese beim Erreichen der vorgegebenen Brauchwassertemperatur beendet, und
**dass** mittels eines weiteren Temperatursensors (31) die Temperatur des Heizkreis-Vorlaufes (16) gemessen wird und
**dass** der Regelkreis (11) in einem Winterbetriebsmodus in Abhängigkeit von der Unterschreitung der vorgegebenen Vorlauftemperatur die Einschaltung des Wärmeerzeugers (10) mit vorrangiger Priorität vor den Temperaturbedingungen im Brauchwasserkreis (15) steuert.

2. Verfahren zum Betreiben einer Heizungsanlage nach Anspruch 1, **dadurch gekennzeichnet, dass** der am Brauchwasser-Ausgang des Wärmetauschers (12) angeschaltete Temperatursensor (30) ein Temperatur-Messsignal (32) an den Regelkreis (11) weiterleitet.

3. Verfahren zum Betreiben einer Heizungsanlage nach Anspruch 1 oder 2, wobei in den Heizkreis (18) ein Umsteuerventil (20) eingeschleift ist, dem eine Umschaltventil-Steuerschaltung (29) zugeordnet ist, **dadurch gekennzeichnet,**
**dass** dem Brauchwasserkreis (15) über eine Wasserarmatur (25) mit Wasserarmatur-Steuerschaltung (28) Kaltwasser (24) zugeführt werden kann,
**dass** die Wasserarmatur-Steuerschaltung (**28**) bei Zufuhr von Kaltwasser (24) ein Schaltsignal (33) an die Umsteuerventil-Steuerschaltung (29) abgibt und
**dass** das umgesteuerte Umschaltventil (20) den eigentlichen Heizkreis (18) abschaltet und auf einen Innenwasserkreis (21) umschaltet.

4. Verfahren zum Betreiben einer Heizungsanlage nach Anspruch 2, **dadurch gekennzeichnet, dass** diese Umschaltung des Heizkreises (18) zumindest bis zur Beendigung der Brauchwasserentnahme und Beendigung des Schaltsignals (33) aufrecht erhalten wird.

## Claims

1. A method for operating a heating system comprising a heat generator (10) provided with a control loop (11) which supplies heat to a heat exchanger (12) comprising a domestic hot water circuit (15) and a heating water circuit (18), wherein a circulating pump (23) having a programmable switch-on time is incorporated in the domestic hot water circuit (15) with branching taps (22) and wherein the temperature of the domestic hot water can be preselected, **characterised in that** at least with the switch-on phases of the circulating pump (23), the control loop (11) is triggered and monitors the domestic hot water temperature by means of a temperature sensor (30) and that when the heat generator (10) is switched off, the control loop (11) initiates after-heating via the heat generator (10) when the domestic hot water temperature falls below a predefined level and terminates this when the domestic hot water temperature reaches the predefined level, and that the temperature of the heating circuit flow line (16) is measured by means of another temperature sensor (31) and that in a winter operating mode the control loop (11) controls the switch-on of the heat generator (10) with priority over the temperature conditions in the domestic hot water circuit (15) depending on the flow temperature falling below the predefined value.

2. The method for operating a heating system according to claim 1, **characterised in that** the temperature sensor (30) connected to the domestic hot water outlet of the heat exchanger (12) passes the temperature measurement signal (32) to the control loop (11).

3. The method for operating a heating system according to claim 1 or 2, wherein a reversing valve (20) is incorporated in the heating circuit (18), having a reversing valve control circuit (29) assigned thereto, **characterised in that** cold water (24) can be supplied to the domestic hot water circuit (15) via a water fitting (25) having a water-fitting control circuit (24), that the water-fitting control circuit (28) delivers a switching signal (33) to the reversing-valve control circuit (29) when cold water is supplied (24) and that the controlled reversing valve (20) switches off the actual heating circuit (18) and switches over to an internal water circuit (21).

4. The method for operating a heating system according to claim 2, **characterised in that** this switchover of the heating circuit (18) is maintained at least until the withdrawal of domestic hot water has ended and the switching signal (33) is ended.

## Revendications

1. Procédé pour exploiter une installation de chauffage comprenant un générateur de chaleur (10) doté d'un circuit régulateur (11), qui alimente en chaleur un échangeur de chaleur (12) avec un circuit d'eau sanitaire (15) et un circuit d'eau de chauffage (18), une pompe de circulation (23) programmable dans sa période de mise en route étant intégrée dans le circuit d'eau sanitaire (15) avec des points de distribution (22) de dérivation et la température de l'eau sanitaire pouvant être présélectionnée, **caractérisé en ce que**
le circuit régulateur (11) est actionné au moins avec les phases de mise en route de la pompe de circulation (23), lequel circuit contrôle la température d'eau sanitaire au moyen d'un capteur de température (30), et
**en ce que** le circuit régulateur (11) enclenche un post-chauffage lorsque le générateur de chaleur (10) est déconnecté en cas de sous-dépassement de la température prédéfinie de l'eau sanitaire par le biais du générateur de chaleur (10) et arrête ce post-chauffage lorsque la température prédéfinie de l'eau sanitaire est atteinte, et
**en ce que** la température de la branche aller du circuit de chauffage (16) est mesurée au moyen d'un autre capteur de température (31) et
**en ce que** le circuit régulateur (11) commande dans un mode de service d'hiver en fonction du sous-dépassement de la température aller prédéfinie l'enclenchement du générateur de chaleur (10) avec une priorité absolue sur les conditions de température dans le circuit d'eau sanitaire (15).

2. Procédé pour exploiter une installation de chauffage selon la revendication 1, **caractérisé en ce que** le capteur de température (30) rattaché à la sortie d'eau sanitaire de l'échangeur de chaleur (12) transmet un signal de mesure de température (32) au circuit régulateur (11)

3. Procédé pour exploiter une installation de chauffage selon la revendication 1 ou 2, une vanne d'inversion (20) étant intégrée dans le circuit de chauffage (18), vanne à laquelle est attribué un circuit de commande de vanne d'inversion (29), **caractérisé en ce que**
de l'eau froide (24) peut être amenée au circuit d'eau sanitaire (15) par une robinetterie d'eau (25) avec le circuit de commande de robinetterie d'eau (28),
**en ce que** le circuit de commande de robinetterie d'eau (28) envoie en cas d'arrivée d'eau froide (24) un signal de commutation (33) au circuit de commande de vanne d'inversion (29) et
**en ce que** la vanne d'inversion (20) inversée déconnecte le circuit de chauffage (18) proprement dit et bascule sur un circuit d'eau intérieur (21).

4. Procédé pour exploiter une installation de chauffage selon la revendication 2, **caractérisé en ce que** cette inversion du circuit de chauffage (18) est maintenue au moins jusqu'à l'achèvement du prélèvement d'eau sanitaire et l'achèvement du signal de commutation (33).
